# EUROPEAN PATENT APPLICATION

(11) **EP 0 606 942 A1**
(43) Date of publication of application: **20.07.1994**
(21) Application number: 94200030.8
(22) Date of filing: 07.01.1994
(51) Int. Cl.: G01P 3/487

(54) **Angular speed and position measuring device and method**

(30) Priority: 15.01.1993 US 5318
(71) Applicant: Magnavox Electronic Systems Company, Fort Wayne Indiana 46808-1187 (US)
(72) Inventor: Bergstedt, Roderick, c/o INT. OCTROOIBUREAU B.V., NL-5656 AA Eindhoven (NL); Klapheke, Thomas, c/o INT. OCTROOIBUREAU B.V., NL-5656 AA Eindhoven (NL); Scheiber, Donald, c/o INT. OCTROOIBUREAU B.V., NL-5656 AA Eindhoven (NL); Smith, Russell, c/o INT. OCTROOIBUREAU B.V., NL-5656 AA Eindhoven (NL)
(74) Representative: Johnson, Terence Leslie

(57) **Abstract**

In a preferred embodiment, a method of determining the angular position, rotational speed, and/or acceleration of a rotatable member, which includes: providing on the rotatable member an annular magnetic source generating tangential, radial, and axial magnetic flux field components; detecting, at a location in proximity to the magnetic source, the amplitude and/or change of amplitude of (1) the tangential field component and (2) either of the radial or axial field components or a combination of the radial and axial field components; and determining from the outputs the angular position, rotational speed, and/or acceleration of the rotatable member.

## Description

### BACKGROUND OF THE INVENTION

### 1. Field of the Invention.

The present invention relates to position sensing generally and, more particularly, but not by way of limitation, to a novel device and method for measuring angular speed and position.

### 2. Background Art

There are a number of known devices for measuring angular position and/or speed of a rotating member. These are useful in many applications and, recently, have been employed in antiskid brake systems (ABS) and for vehicular traction control.

Most ABS systems in use today rely upon passive variable reluctance sensing elements disposed in proximity to a toothed iron wheel to detect the speed of rotation of a wheel or drive shaft. Such devices suffer from two primary disadvantages: (1) the output signal of the sensing device degrades unless a close tolerance is kept between the sensor and the toothed wheel (typically 0.015 inches), and (2) the amplitude of the output signal decreases as the rotational speed decreases. The former disadvantage results in high manufacturing cost and susceptibility to minor dislocations between the sensor and the toothed wheel, leading to reliability problems. The second disadvantage renders this type of device of limited utility at low speeds. A complicated arrangement of sensors and wheel teeth must be employed if absolute angular position information is to be derived therefrom.

Accordingly, it is a principal object of the present invention to provide an angular speed and position measuring device which is economical to install and which does not require critical physical alignment.

It is another object of the invention to provide such a measuring device which can be calibrated after installation.

It is another object of the invention to provide such a measuring device which can accept minor dislocations in the field.

Other objects of the present invention, as well as particular features, elements, and advantages thereof, will be elucidated in, or be apparent from, the following description and the accompanying drawing figures.

### SUMMARY OF THE INVENTION

The present invention achieves the above objects, among others, by providing, in a preferred embodiment, a method of determining the angular position, rotational speed, and/or acceleration of a rotatable member, comprising: providing on said rotatable member an annular magnetic source generating tangential, radial, and axial magnetic flux field components; detecting, at a location in proximity to said magnetic source, the amplitude and/or change of amplitude of (1) said tangential field component and (2) either of said radial or axial field components or a combination of said radial and axial field components; and determining from said outputs the position, rotational speed, and/or acceleration of said rotatable member.

### BRIEF DESCRIPTION OF THE DRAWING

Understanding of the present invention and the various aspects thereof will be facilitated by reference to the accompanying drawing figures, submitted for purposes of illustration only and not intended to define the scope of the invention, on which:
Figures 1 and 2 schematically illustrate magnetic flux field components produced by an annular magnet which is disposed about, and rotates with, an axle or shaft,
Figure 3 schematically illustrates a directional sensor disposed in one position relative to a magnet of Figures 1 or 2,
Figure 4 schematically illustrates a directional sensor disposed in another position relative to a magnet of Figures 1 or 2,
Figure 5 is a typical polar diagram illustrating strengths of magnetic field components as functions of angle of rotation of a magnet of Figures 1 or 2 and the measured angle of the field components,
Figure 6 is an exploded perspective view of a magnetic angular position sensor unit constructed according to the present invention,
Figure 7 is a fragmentary, side elevational view, of the sensor unit of Figure 6 mounted in an axle housing,
Figure 8 is a fragmentary, perspective view, partially cut-away, of an alternative embodiment of a magnetic angular position sensor unit constructed according to the present invention,
Figure 9 is a fragmentary, perspective view, partially in cross-section of another alternative embodiment of a magnetic angular position sensor unit constructed according to the present invention and
Figure 10 is a fragmentary, perspective view, partially in cross-section of a further alternative embodiment of a magnetic angular position sensor unit constructed according to the present invention.

### DETAILED DESCRIPTION OF THE PREFERRED EMBODIMENTS

Referring should now be made to the drawing figures, on which similar or identical elements are given consistent identifying numerals throughout the various figures thereof, and on which parenthetical references to figure numbers direct the reader to the view(s) on which the element(s) being described is (are) best seen, although the element(s) may be seen also on other views.

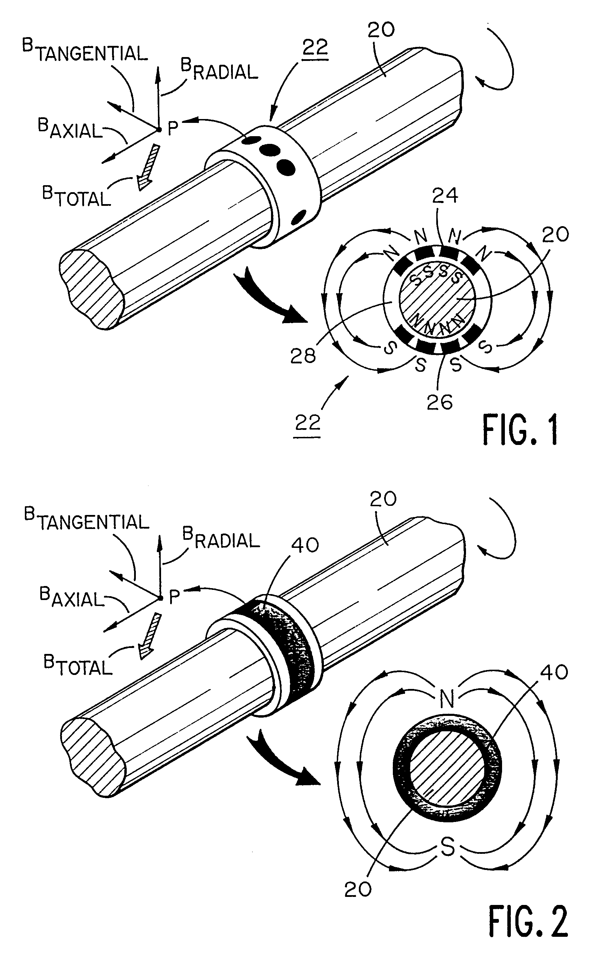

Figure 1 illustrates a rotatable, cylindrical shaft 20 on the surface of which is circumferentially attached thereto an annular magnet structure, generally indicated by the reference numeral 22. Magnet structure 22 comprises a plurality of axially magnetized, cylindrical magnets, such as 24 and 26, embedded in a suitable host material 28 mounted around shaft 26 to produce a magnetic field which emanates from a distributed N polar region of the magnet structure and terminates in a distributed S polar region thereof.

Magnet structure 22 produces a magnetic field in the region about shaft 20 which rotates with the rotation of the shaft and which may be visualized as shown. The total magnetic flux density at any point P in this region is given by Bₜₒₜₐₗ which is the sum of three orthogonal flux density components Bₐₓᵢₐₗ, B_{radial}, and B_{tangential} as shown.

Figure 2 illustrates shaft 20 having thereon a continuous annular magnetized solid ring 40 which produces a magnetic filed somewhat similar to that produced by magnet structure 22 on Figure 1.

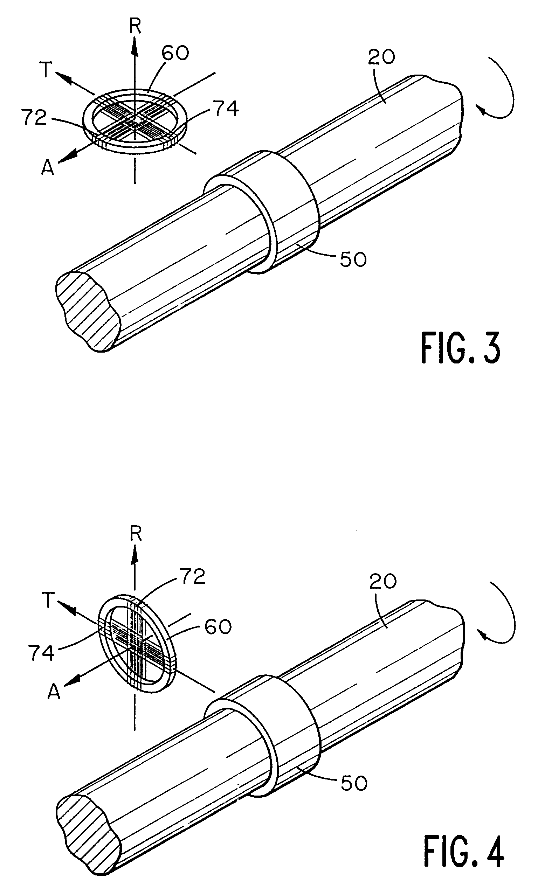

Figure 3 illustrates one arrangement for detecting the field strength of a magnetic source 50 disposed about shaft 20. Here, a directional magnetic sensor 60, such as a toroidal fluxgate compass, or magnetometer, element which detects the angular "direction" of a rotating magnetic field in the plane of operation of the sensor, is disposed in proximity to magnetic source 50.

A type of fluxgate compass, or magnetometer, useful in the present invention, and the construction thereof and controls therefore, are discussed in "Technical Support Package for Tech Brief LAR-13560, 'Improved Flux-Gate Magnetometer,' by H. Douglas Garner, NASA Tech Briefs, P-27, October 1987, National Aeronautics and Space Administration, Technology Utilization Office, Langley Research Center, Hampton, Virginia," which document and the references cited therein are incorporated by reference hereinto.

As shown on Figure 3, sensor 60 is oriented such that the sensitive plane of of the sensor is orthogonal to the radial field component, and the sensor will monitor the tangential and axial field components through orthogonal secondary sensing windings 72 and 74, respectively. Sensor 60 will also be provided with a primary winding (not shown). As magnetic source 50 rotates, the axial field will be at a maximum when the N pole of the magnet is adjacent the sensor. In this position, the tangential field component is at a null. Rotating magnetic source 50 through 90 degrees places a maximum in the tangential field and a null in the axial field at sensor 60. These field components, therefore, form, roughly speaking, sine and cosine functions of the orientation of the shaft, which, through conventional processing techniques, can be used to determine shaft orientation and, from the time rate of change of orientation, the speed and acceleration of shaft 20.

Figure 4 illustrates sensor 60 disposed such that the sensitive plane thereof is orthogonal to the axial field component so that sensing windings 72 and 74 detect the tangential and radial field components, respectively. In this configuration, when the N pole is adjacent sensor 60, the radial component is at a maximum and the tangential is at a null. Rotation through 90 degrees places a null in the radial component and a maximum in the tangential component. These field components may, therefore, be used to determine shaft rotation and position in the same manner that the axial and tangential field components were employed above with reference to Figure 3.

The magnetic source/sensor arrangements described above perform well even if shaft 20 is made of steel or of other magnetizable material. In fact, the shaft itself may be magnetized to provide a magnetic source. Furthermore, these arrangements function well when enclosed in a steel axle housing or other similar enclosure which does modify the intensity and direction of the magnetic field. Under such conditions, the sensor-to-source distance and orientation may be adjusted to compensate for the modified field.

Although the use of solid ring magnet 40 on Figure 2 is satisfactory, the use of distributed magnet sources shown on Figure 1 is preferable in that that arrangement is less expensive to fabricate and it offers flexibility in that it permits arranging the positions of the distributed sources to shape the magnetic field in a desired manner for enhanced sensing thereof. Even though the Figure 1 arrangement produces a magnetic field with distributed sources, the magnetic field is fairly uniform at the points of sensing shown on Figures 3 and 4.

Sensor placement with respect to the magnetic source is not critical and good performance can be obtained in an axle housing environment, for example, with axial separation between the sensor and the source of between 0.5 and 2 inches. Radial placement is also not critical, but should be consistent to within about 0.25 inch.

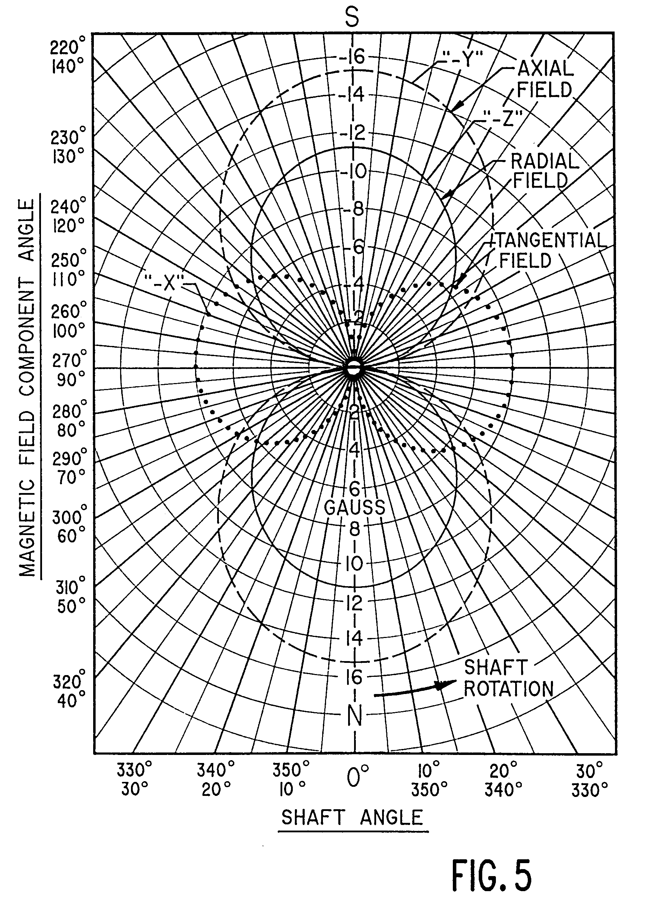

The relationship between shaft position and magnetic field component strength is shown on Figure 5. Inspection of Figure 5 indicates that the axial and radial field components contain redundant information (they are in phase with one another) and, therefore, either of them, or any combination of them, may be used, together with the tangential field component to measure shaft orientation. This implies that the plane of operation of sensor 60 (Figures 3 and 4) may be angularly located anywhere within a 90-degree sector, between the positions shown on Figures 3 and 4, as long as the sensor is rotated about an axis in the direction of the tangential field. This allows considerable freedom in orientation of the plane of operation of sensor 60 and allows one to mount the sensor in various orientations to ease installation or optimize performance.

A sensor located in the plane of an annular magnetic source will detect no axial field, since there is none, and must be oriented with its axis directed coaxially with the rotating source in order to detect the radial and tangential fields.

As the sensor is moved axially away from the annular magnetic source, the axial field increases and the sensor may be rotated about the direction of the tangential field component to detect a combination of the axial and radial field components together with the tangential field component to determine shaft orientation. While the plane of operation of the sensor is not critical, in general the normal to the plane of operation should be rotated from the direction of the axial component toward the direction of the radial component as the sensor is moved axially away from the magnet source.

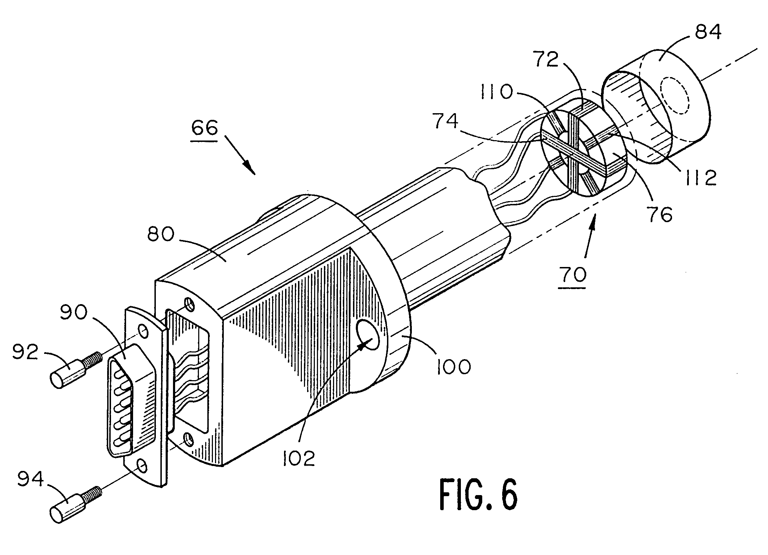

Figure 6 illustrates a sensor unit, generally indicated by the reference numeral 66, including a sensor, generally indicated by the reference numeral 70, mounted therein. Sensor 70 is basically a conventional fluxgate magnetometer arranged with orthogonal sets of secondary windings 72 and 74 to serve as the sensing elements. Windings 72 and 74 are wound to span the entire diameter of a high-permeability, toroidal core 76 for ease of fabrication. Core 76 has a primary winding wound thereabout, shown wound in quadrature sections 110 and 112, 45 degrees from the secondary windings 72 and 74. Primary winding sections 110 and 112 are wound unidirectionally to induce an AC magnetic field in core 76. The arrangement of secondary windings 72 and 74 is equivalent to diametrically opposed windings in a toroidal transformer wired so as to cancel the voltage output ordinarily seen.

If the magnetic flux induced by primary winding sections 110 and 112 (driven at about 1 KHz) were homogeneous throughout core 76, then the voltages generated in diametrically opposed secondary windings of 72 and 74 would be equal and, when summed in opposition, would give no output. In the presence of an external DC magnetic field, however, the external flux will enter core 76 and divide between the two sides thereof. This flux will, at any instant of time, add to the driving flux in one arm and subtract from it in the other. The net result is a non-homogeneous flux distribution in the arms of core 76 orthogonal to the direction of the external field. One of secondary windings 72 or 74 wound on the arms orthogonal to the direction of the external field will, therefore, produce an output voltage, while the orthogonal set will produce none. Therefore, sine and cosine directional channels are produced and the direction of the magnetic field can be inferred from the outputs of the two sets of secondary windings. Conventional processing of these signals will produce information as to angular position, speed, and/or acceleration.

Sensor unit 66 includes a housing 80 having a hollow cylindrical portion 82 extending from the distal end thereof in which cylindrical portion sensor 70 is mounted. A high-permeability, cylindrical magnetic shield 84 may be fitted over sensor 70 to make the sensed magnetic field more uniform in the internal region containing the sensor. Shield 84 can also be used to control the field strength for operation near the magnetizing ring (50, Figures 3 and 4). The thickness of shield 84, the material thereof, and the shape thereof must be selected to optimize sensor performance in the magnetic environment of the particular application. Shield 84 may take a variety of shapes, from a simple ring to the fully closed cap surrounding and enclosing sensor 70 shown on Figure 6.

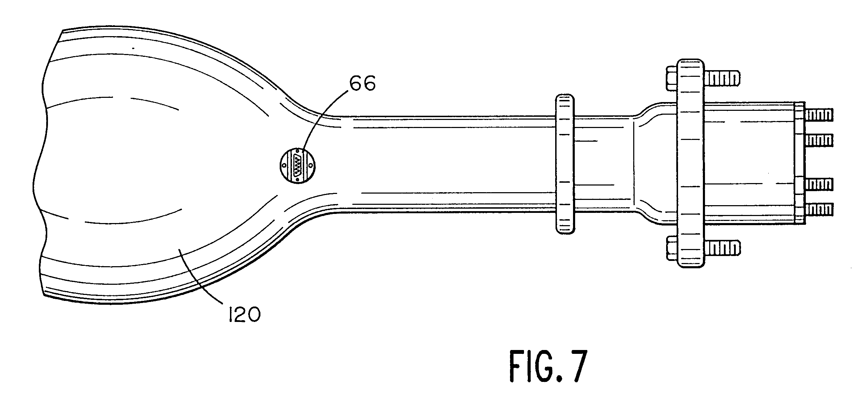

At the proximal end of housing 80 is a connector 90 mounted thereto by means of screws 92 and 94. Housing 80 has formed thereabout a mounting flange 100 having holes, as at 102, defined therethrough such that sensor unit 66 may be bolted to an axle housing 120, as shown on Figure 7, for example.

Alignment of orthogonal secondary windings 72 and 74 (Figure 6) is not critical if the tangential field and the orthogonal field (combination of radial and axial) sensed by sensor 70 are well matched. If this is not the case, secondary windings 72 and 74 must be aligned so that one senses only the tangential field and the other senses only the orthogonal field. In the latter configuration, the outputs of the orthogonal windings may be independently and differently amplified in the electronics (not shown) so as to give more nearly equal amplitudes as the sensed member rotates.

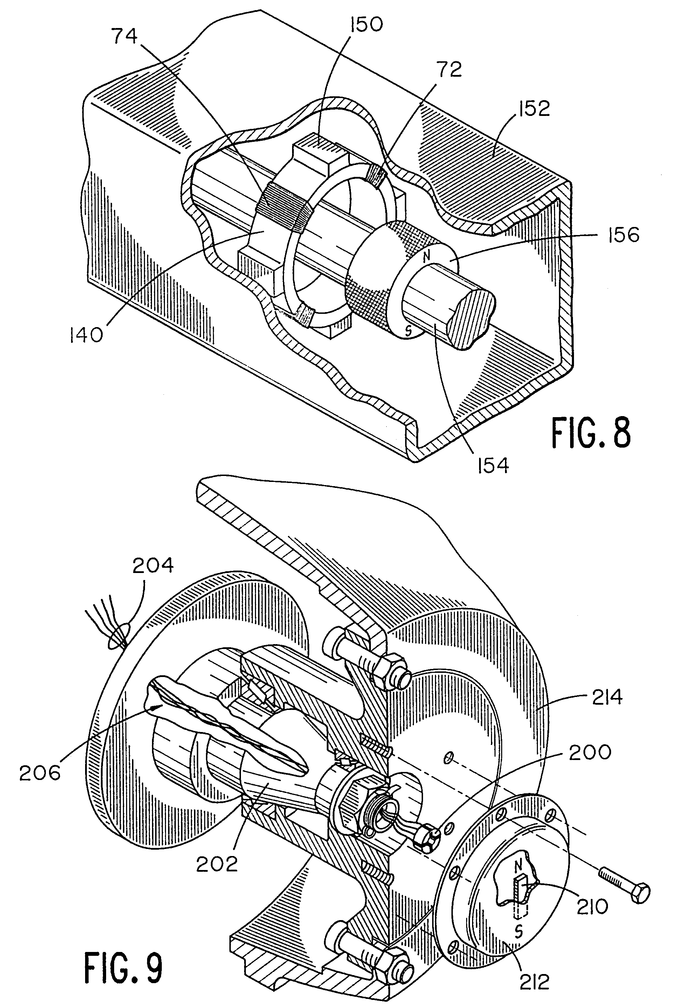

Figure 8 illustrates a toroidal ring sensor 140, of the type described above, mounted in a housing 152 by means of a plurality of mounting flanges, as at 150, and coaxially surrounding a rotating axle 154. In this case, secondary windings 72 and 74 are not wound completely around toroidal ring 76, since axle 154 passes through the center of the ring. (Primary windings are not shown.) Each sensor channel is now composed of diametrically opposed windings on toroidal ring 76, which are wound in electrical opposition to cancel the combined output when no external magnetic field is present. Toroidal ring 140 is shown as being axially displaced from a ring magnet 156 mounted on axle 154, but the sensor could also be mounted superjacent the ring magnet. The arrangement shown is preferable, since the diameter of the sensor can be smaller and installation thereof easier and less expensive. In either case, the non-rotating sensor detects the rotational angle of axle 154 by detecting the rotation of the tangential component of the magnetic field produced by ring magnet 156.

Figure 9 illustrates an embodiment of the present invention which is useful where wheel rotation on a non-rotating spindle or axle must be determined, such as in the case of non-driven vehicle wheels. Here, a sensor 200, is mounted at the distal end of a fixed spindle 202, with leads 204 from the sensor disposed in a channel 206 defined through the spindle. A magnetic source 210, which may be a ring or, as shown, a dipole bar magnet, is fixedly attached to a grease cap, or hub, 212 which, in turn, is fixedly mounted to a drum 214 which rotates coaxially about spindle 202. Sensor 200, in this case, senses the rotation of the field in the magnetic dipole's equatorial plane and detects the angular orientation from the field orientation thereof.

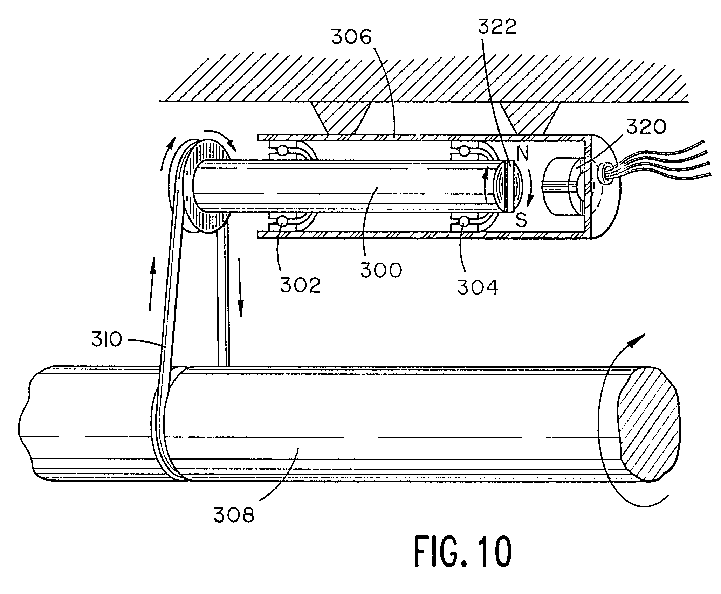

In some cases, it may be undesirable to mount a ring magnet on a shaft or it may be that the sensing of shaft rotation is to be done remote from the shaft. Figure 10 illustrates an embodiment of the present invention suitable for use in such cases. Here, a secondary shaft 300 is journalled in bearings 302 and 304 in a fixed mount 306. Secondary shaft 300 rotates about an axis parallel to the axis of rotation of a primary shaft 308, the rotation of the latter being of interest, and is driven by the primary shaft by means of a continuous belt 310, or other drive means may be provided. A fluxgate sensor 320 is fixedly attached to mount 306 in proximity to a dipole magnet 322 mounted at the end of secondary shaft 300. Operation of the arrangement is identical to that described above with reference to Figure 9. Rotation of primary shaft 308 is easily determined from the sensed rotation of secondary shaft 300. Other means of determining the orientation of secondary shaft 300 are also possible, such as the means described above with reference to Figures 3 and 4.

All patent applications, patents, and other documents cited herein are incorporated in their entirety by reference hereinto.

It will thus be seen that the objects set forth above, among those elucidated in, or made apparent from, the preceding description, are efficiently attained and, since certain changes may be made in the above construction without departing from the scope of the invention, it is intended that all matter contained in the above description or shown on the accompanying drawing figures shall be interpreted as illustrative only and not in a limiting sense.

It is also to be understood that the following claims are intended to cover all of the generic and specific features of the invention herein described and all statements of the scope of the invention which, as a matter of language, might be said to fall therebetween.

## Claims

1. A method of determining the angular position, rotational speed, and/or acceleration of a rotatable member, comprising:
(a) providing on said rotatable member an annular magnetic source generating tangential, radial, and axial magnetic flux field components;
(b) detecting, at a location in proximity to said magnetic source, the amplitude and/or change of amplitude of (1) said tangential field component and (2) either of said radial or axial field components or a combination of said radial and axial field components; and
(c) determining from said outputs the angular position, rotational speed, and/or acceleration of said rotatable member.

2. A method, as defined in Claim 1, wherein said location is displaced from said annular magnetic source in the plane in which said annular magnetic source lies.

3. A method, as defined in Claim 1, wherein said location is displaced from said annular magnetic source along the central axis thereof.

4. An apparatus for detecting the angular position, rotational speed, and/or acceleration of a rotatable member, comprising:
(a) an annular magnetic source circumferentially disposed on said rotatable member and rotatable therewith, said magnetic source generating tangential, radial, and axial magnetic flux field components;
(b) a directional magnetometer disposed at a location in proximity to said magnetic source, said directional magnetometer being oriented so as to detect the amplitude and/or change of amplitude of (1) said tangential field component and (2) either of said radial or axial field components or a combination of said radial and axial field components, and to provide outputs indicative thereof; and
(c) means to receive said outputs and to determine therefrom the angular position, rotational speed, and/or acceleration of said rotatable member.

5. An apparatus, as defined in Claim 4, wherein said directional magnetometer is disposed at said location displaced from said annular magnetic source in the plane in which said annular magnetic source lies.

6. An apparatus, as defined in Claim 4, wherein said directional magnetometer is disposed at said location displaced from said annular magnet source along the central axis thereof.

7. An apparatus, as defined in Claim 4, wherein said directional magnetometer is a fluxgate magnetometer having a toroidal core and two secondary windings.

8. An apparatus, as defined in Claim 7, wherein said toroidal core lies in the plane of said annular magnetic source.

9. An apparatus, as defined in Claim 7, wherein said toroidal core lies in a plane perpendicular to said annular magnetic source.

10. An apparatus, as defined in Claim 4, wherein said annular magnetic source comprises a plurality of spaced apart, axially magnetized magnets disposed about the circumference of said rotatable member.

11. An apparatus, as defined in Claim 7, wherein said toroidal core lies in a plane at an angle between the plane of said annular magnetic source and a plane perpendicular to said annular magnetic source.

12. An apparatus, as defined in Claim 7, wherein said toroidal core is coaxially aligned with said annular magnetic source.

13. An apparatus, as defined in Claim 12, wherein said toroidal core is axially displaced from said annular magnetic source.

14. An apparatus, as defined in Claim 4, wherein said directional magnetometer has a high-permeability shield thereabout.

15. An apparatus for detecting the angular position, rotational speed, and/or acceleration of a drum rotatably mounted on a fixed spindle, comprising:
(a) a cap member fixedly attached to said drum over the distal end of said spindle;
(b) a magnetic source fixedly attached to said cap member in proximity to said distal end of said spindle; and
(c) a directional magnetometer fixedly disposed in said distal end of said spindle and being oriented so as to detect the amplitude and/or change of amplitude of (1) said tangential field component and (2) either of said radial or axial field components or a combination of said radial and axial field components, and to provide outputs indicative thereof.

16. An apparatus for detecting the angular position, rotational speed, and/or acceleration of a primary rotatable shaft, comprising:
(a) a secondary rotatable shaft rotated at a speed proportional to that of said primary rotatable shaft;
(b) a magnetic source fixedly disposed on said secondary shaft; and
(c) a directional magnetometer fixedly disposed with respect to said secondary shaft and disposed at a location in proximity to said magnetic source, said directional magnetometer being oriented so as to detect the amplitude and/or change of amplitude of (1) said tangential field component and (2) either of said radial or axial field components or a combination of said radial and axial field components, and to provide outputs indicative thereof.
